(19) Europäisches Patentamt
European Patent Office
Office européen des brevets

(11) **EP 2 305 607 A1**

(12) **EUROPEAN PATENT APPLICATION**
published in accordance with Art. 153(4) EPC

(43) Date of publication:
**06.04.2011 Bulletin 2011/14**

(51) Int Cl.:
*C01G 1/00* *(2006.01)*   *C01G 1/12* *(2006.01)*

(21) Application number: **09794261.9**

(22) Date of filing: **03.06.2009**

(86) International application number:
**PCT/JP2009/060196**

(87) International publication number:
**WO 2010/004814 (14.01.2010 Gazette 2010/02)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **07.07.2008 JP 2008176868**

(71) Applicant: **Asahi Glass Company Limited Chiyoda-ku Tokyo 100-8405 (JP)**

(72) Inventors:
• **KAWAI, Yohei**
  **Tokyo 100-8405 (JP)**
• **YONEDA, Takashige**
  **Tokyo 100-8405 (JP)**

(74) Representative: **Müller-Boré & Partner Patentanwälte Grafinger Straße 2 81671 München (DE)**

(54) **CORE-SHELL PARTICLE AND METHOD FOR PRODUCING CORE-SHELL PARTICLE**

(57)   To provide core-shell particles having a dense shell, and a method whereby the core-shell particles can be produced in a short period of time.

Core particles wherein the shell has a thickness of from 1 to 500 nm and has 0.01 cc/g as the maximum pore volume value of pores having diameters of at most 3 nm in a pore volume histogram obtained by nitrogen adsorption, and an average particle size in a dispersion medium is from 1 to 1,000 nm; is obtained by irradiating a liquid containing core particles made of a material having a dielectric constant of at least 10 and a metal oxide precursor with a microwave to form a shell made of a metal oxide on the surface of the core particles.

**Description**

TECHNICAL FIELD

The present invention relates to core-shell particles and method for producing the core-shell particles.

BACKGROUND ART

Metal oxide particles such as titanium oxide or zinc oxide particles have ultraviolet shielding properties, and they are used for fillers for resin, cosmetics, etc. Further, metal oxide particles such as particles of tin oxide doped with indium (hereinafter referred to as ITO) have infrared shielding properties, and they are used for fillers for resin, coatings for glass, etc.
However, such metal oxide particles have the following problems.

(i) Titanium oxide, zinc oxide, etc. have a photocatalytic activity, and in a case where the metal oxide particles are used for fillers for resin, cosmetics, etc., they are likely to decompose organic matters (other components composing resin or cosmetics).
(ii) In a case where zinc oxide particles are used for fillers for fluororesin, zinc oxide reacts with fluorinated compounds released from a fluororesin to form zinc fluoride, and therefore the ultraviolet shielding properties are weakened.
(iii) In a case where ITO particles are used for fillers for resin, coatings for glass, etc., ITO undergoes oxidation deterioration, and therefore the infrared shielding properties are weakened.

Accordingly, in a case where metal oxide particles are used for the above-described applications, usually, metal oxide particles are used as core particles and the surface of particles is coated by a shell made of a metal oxide such as silicon oxide (silica), and then used as core-shell particles.
For example, as the core-shell particles for cosmetics, the followings are known. (1) Silica-coated metal oxide particles having a silica film thickness of from 0.1 to 100 nm (Patent Document 1).
However, in the core-shell particles of (1), the shell is formed under a low temperature condition, whereby the shell has relatively large pores. Therefore, it is not possible to solve the problems of the above (i) to (iii) sufficiently. Further, the shell is formed under a low temperature condition, whereby it takes time to form the shell.
To solve the problems of the above (i) to (iii), it is necessary to form a dense shell. In order to form such a dense shell, the shell may be formed under a high temperature condition. However, if the shell is formed under a high temperature condition, the material for the shell is deposited independently at other than the surface of the core particles. Accordingly, it is difficult to obtain core-shell particles having a dense shell.

PRIOR ART DOCUMENT

PATENT DOCUMENT

Patent Document 1: WO98/47476

DISCLOSURE OF THE INVENTION

OBJECT TO BE ACCOMPLISHED BY THE INVENTION

The present invention is to provide core-shell particles having a dense shell and a method for producing the core-shell particles in a short period of time.

MEANS TO ACCOMPLISH THE OBJECT

The present invention provides the following constructions.

[1] Core-shell particles comprising core particles made of a material having a dielectric constant of at least 10 and a shell made of a metal oxide and formed on the surface of the core particles, wherein the shell has a thickness of from 1 to 500 nm and has 0.01 cc/g as the maximum pore volume value of pores having diameters of at most 3 nm in a pore volume histogram obtained by nitrogen adsorption; and an average particle size in a dispersion medium is from 1 to 1,000 nm.

[2] The core-shell particles according to [1], wherein the material for the core particles is a metal oxide, a metal sulfide or a metal chalcogenide.

[3] The core-shell particles according to [2], wherein the material for the core particles is zinc oxide, titanium oxide or cerium oxide.

[4] The core-shell particles according to [2], wherein the material for the core particles is indium-doped tin oxide or tin oxide.

[5] The core-shell particles according to [2], wherein the material for the core particles is manganese-doped zinc sulfide, cadmium sulfide, zinc selenide or europium-doped yttrium vanadate.

[6] The core-shell particles according to any one of [1] to [4], wherein the core-shell particles have an average primary particle size of from 1 to 500 nm.

[7] The core-shell particles according to any one of [1] to [6], wherein the material for the shell is silicon oxide.

[8] A method for producing the core-shell particles as defined in any one of [1] to [7], which comprises irradiating a liquid containing core particles made of a material having a dielectric constant of at least 10 and a metal oxide precursor with a microwave to form a shell made of a metal oxide on the surface of the core particles.

[9] The method for producing core-shell particles according to [8], wherein the microwave has an output power by which the liquid containing core particles made of a material having a dielectric constant of at least 10 and a metal oxide precursor, is heated to a level of from 100 to 500°C.

[10] The method for producing core-shell particles according to [8] or [9], wherein the metal oxide precursor is an alkoxysilane.

[11] A coating composition comprising the core-shell particles as defined in any one of [1] to [7], and a dispersion medium.

[12] An article comprising a substrate and a coating film made of the coating composition as defined in [11] formed on the substrate.

ADVANTAGEOUS EFFECTS OF THE INVENTION

The core-shell particles of the present invention have a dense shell, whereby a photocatalytic activity of the core particles is sufficiently suppressed, and therefore degeneration or deterioration of the core particles is sufficiently suppressed.

By the method for producing core-shell particles of the present invention, it is possible to produce core-shell particles having a dense shell in a short period of time.

BRIEF DESCRIPTION OF THE DRAWING

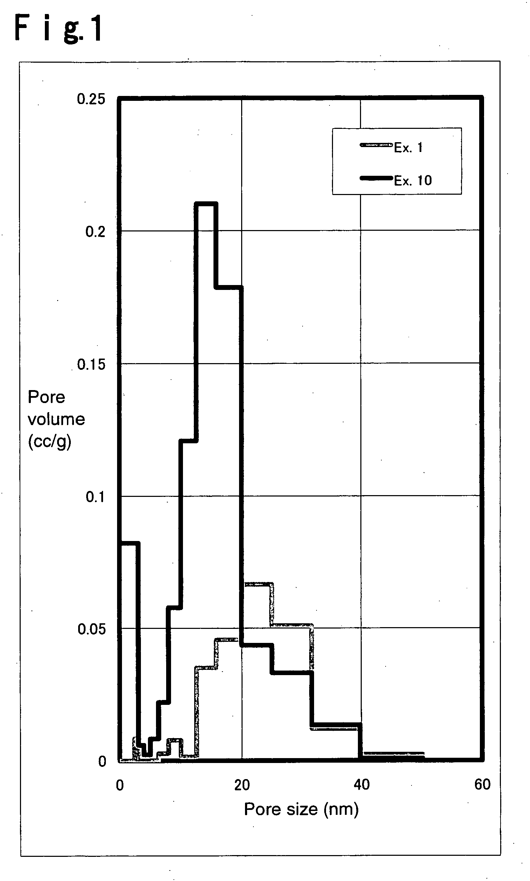

Fig. 1 is a pore volume histogram of the core-shell particles obtained in Example 1 of the present invention and Example 10 as Comparative Example of the present invention, obtained by nitrogen adsorption.

BEST MODE FOR CARRYING OUT THE INVENTION

<Core-shell particles>

The core-shell particles of the present invention are core-shell particles comprising core particles and a shell made of a metal oxide and formed on the surface of the core particles.

The dielectric constant of the material for core particles is at least 10, preferably from 10 to 200, more preferably from 15 to 100. When the dielectric constant of the material for core particles is at least 10, adsorption of the microwave tends to be easy, whereby it becomes possible to heat core particles selectively and at a high temperature by the microwave.

The electric power which is converted to heat inside of the dielectric material at the time of irradiation with the microwave is represented by the following formula (1).

$$P = 2\pi f E^2 \varepsilon \tan\delta \qquad (1)$$

(P: Electric power, f: frequency, E: magnitude of electric field, $\varepsilon$: dielectric constant, $\tan\delta$: dielectric loss tangent)

Accordingly, the amount of generated heat is determined by multiplication of the dielectric constant and the dielectric loss tangent, and therefore a material having a large dielectric loss tangent and dielectric constant tends to be easily heated. The dielectric loss tangent is preferably from 0.001 to 1, more preferably from 0.01 to 1.

The dielectric constant and the dielectric loss tangent can be calculated based on values of reflection coefficient and phase which are measured in accordance with JIS-R1627 after applying an electric field to a test sample by a bridge circuit, by using a network analyzer.

The material for the core particles may, for example, be a metal oxide, a metal sulfide or a metal chalcogenide.

These materials may be doped with other atoms. The doping atoms may, for example, be Ce, Nd, Sm, Eu, Gd, Tb, Dy, Er, Tm, Yb, Al, Mn, Fe, Co, Ni, Cu and Bi.

The amount of doping atoms is preferably from 0.1 to 20 mol%, more preferably from 0.3 to 10 mol%, particularly preferably from 0.5 to 5 mol%, based on the amount of a metal oxide to be doped. When the amount of doping is less than 0.1 mol%, an impurity level is insufficient and therefore properties will be deteriorated, such being undesirable. When the amount of doping is larger than 20 mol%, an impurity level is excessive and therefore properties will be deteriorated due to interaction between impurities, such being undesirable.

The material having a dielectric constant of at least 10 may, for example, be a metal oxide such as zinc oxide (dielectric constant: 18), titanium oxide (dielectric constant: 30), ITO (indium-doped tin oxide) (dielectric constant: 24), aluminium oxide (dielectric constant: 12), zirconium oxide (dielectric constant: 13), ferric oxide (dielectric constant: 16), cadmium oxide (dielectric constant: 17), copper oxide (dielectric constant: 18), bismuth oxide (dielectric constant: 18), tungsten oxide (dielectric constant: 20), cerium oxide (dielectric constant: 21), tin oxide (dielectric constant: 24) or europium-doped yttrium vanadate (dielectric constant: 10); a metal sulfide such as zinc sulfide (dielectric constant: 13), manganese-doped zinc sulfide (dielectric constant: 13) or cadmium sulfide (dielectric constant: 10); a metal chalcogenide such as zinc selenide.

The core particles are preferably zinc oxide particles, titanium oxide particles or cerium oxide particles, preferably ITO particles or tin oxide particles in view of their excellent infrared shielding properties, and preferably manganese-doped zinc sulfide particles, cadmium sulfide particles, zinc selenide particles or europium-doped yttrium vanadate in view of their excellent photoluminescence properties.

The shape of the core particles is not particularly limited, and a sphere-shape, an angular shape, a needle-shape, a sheet-shape, a chain-shape, a fiber-shape, or a hollow-shape may be used.

The metal oxide to form the shell may, for example, be silicon oxide, aluminium oxide, titanium oxide, zirconium oxide, tin oxide or cerium oxide, and is preferably silicon oxide in view of formation of a dense shell.

The shell thickness of the core-shell particles is from 1 to 500 nm, preferably from 1 to 100 nm, particularly preferably from 1 to 30 nm. When the shell thickness is at least 1 nm, migration of materials via shell is impossible, whereby a photocatalytic activity of the core particles is sufficiently suppressed, and degeneration or deterioration of the core particles is sufficiently suppressed. When the shell thickness is at most 500 nm, functions of the core particles such as ultraviolet shielding properties and infrared shielding properties are sufficiently obtainable.

It is possible to adjust the thickness of the shell by appropriately adjusting the amount of the metal oxide precursor, the output power of the microwave, the irradiation time, etc.

The shell thickness is the average of shell thicknesses of 100 core-shell particles randomly selected by observation with a transmission electron microscope.

The maximum pore volume value of pores having pore sizes (diameters) of at most 3 nm of the shell obtained by nitrogen adsorption of the core-shell particles is 0.01 cc/g, preferably from 0.0001 to 0.01 cc/g. In a pore volume histogram obtained by nitrogen adsorption, when the maximum pore volume value of pores having pore diameters of at most 3 nm of the shell is 0.01 cc/g, the shell is compact, and therefore migration of materials via the shell is impossible, whereby a photocatalytic activity of the core particles is sufficiently suppressed, and degeneration or deterioration of the core particles is sufficiently suppressed.

Further, the range of the core sizes of at most 3 nm should be understood that it includes core sizes of at most 3.4 nm considering round-off of decimal places.
Further, in the histogram described in the following Examples, the peaks shown in a range of pore diameters of at most 3 nm are peaks relating to pores of the shell, and the peaks shown in around from 10 to 20 nm are peaks originated from a hollow structure produced by elution of cores of the core-shell particles, and the broad peaks shown in a range of pore sizes larger than around 20 nm are originated from an air gap existing between the core-shell particles. The core-shell particles of the present invention are characterized by having a dense shell, whereby the core-shell particles are specified by using a pore volume of pores having pore diameters of at most 3 nm.

The average particle size of the core-shell particles in a dispersion medium is from 1 to 1,000 nm, preferably from 3 to 1,000 nm, particularly preferably from 3 to 300 nm. Further, when the core-shell particles are used for a use which requires transparency, the average particle size is preferably from 3 to 100 nm.

The average particle size of the core-shell particles is the average agglomerated particle diameter of the core-shell particles in a dispersion medium and is measured by a dynamic scattering method.

The average primary particle size of the core-shell particles is preferably from 1 to 500 nm, more preferably from 1 to 200 nm, particularly preferably from 1 to 100 nm.

An average primary particle size of the core-shell particles is the average of particle diameters of 100 core-shell particles randomly selected by observation with a transmission electron microscope.

The above-described core-shell particles of the present invention have a dense shell. Therefore, a photocatalytic activity of the core particles is sufficiently suppressed, and degeneration or deterioration of the core particles is sufficiently suppressed.

<Method for producing core-shell particles>

The method for producing core-shell particles of the present invention comprises irradiating a liquid containing core particles made of a material having a dielectric constant of at least 10 and a metal oxide precursor with a microwave to form a shell made of metal oxide on the surface of the core particles.

Specifically, a method comprising the following steps may be mentioned.

(a) A step of adding a metal oxide precursor, and, as the case requires, water, an organic solvent, an alkali or acid, a curing catalyst, etc. to a dispersion of core particles wherein core particles are dispersed in a dispersion medium to prepare a raw material liquid.

(b) A step of heating the raw material liquid by irradiating the raw material liquid with a microwave, and hydrolyzing the metal oxide precursor by using the alkali or acid to deposit a metal oxide on the surface of the core particles, to form a shell, thereby to obtain a dispersion of the core-shell particles.

(c) A step of removing the dispersion medium from the dispersion of core-shell particles to recover the core-shell particles, as the case requires.

Step (a):

The dielectric constant of the material for core particles is at least 10, preferably from 10 to 200. When the dielectric constant of the material for core particles is at least 10, adsorption of the microwave tends to be easy, whereby it becomes possible to heat core particles selectively and to a high temperature by the microwave.

The average particle size of the core particles in the dispersion is preferably from 1 to 1,000 nm, more preferably from 1 to 300 nm. When the average particle size of the core particles is at least 1 nm, the surface area per mass of the core particles does not increase too much, whereby the amount of a metal oxide required for coating will be suppressed. When the average particle size of the core particles is at most 1,000 nm, dispersibility in the dispersion medium becomes good.

The average particle size of the core particles in a dispersion is an average agglomerated particle size of the core particles in a dispersion medium, and is measured by a dynamic scattering method.

The concentration of the core particles is preferably from 0.1 to 40 mass%, more preferably from 0.5 to 20 mass%, in the dispersion (100 mass%) of the core particles. When the concentration of the core particles is at least 0.1 mass%, production efficiency of the core-shell particles becomes good. When the concentration of the core particles is at most 40 mass%, agglomeration of the core particles tends to hardly occur.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethylsulfoxide).

The dispersion medium preferably contains water in an amount of from 5 to 100 mass% based on 100 mass% of the dispersion medium, since water is necessary for hydrolysis of the metal oxide precursor.

The metal oxide precursor may, for example, be a metal alkoxide, and is preferably an alkoxysilane in view of formation of a dense shell.

The alkoxysilane may, for example, be tetramethoxysilane, tetraethoxysilane (hereinafter referred to as TEOS), tetra n-propoxysilane or tetraisopropoxysilane, and is preferably TEOS in view of its appropriate reaction rate.

The amount of the metal oxide precursor is preferably an amount by which the shell thickness becomes from 1 to 500 nm, more preferably an amount by which the shell thickness becomes from 1 to 100 nm, particularly preferably an amount by which the shell thickness becomes from 1 to 30 nm.

The amount of the metal oxide precursor (as calculated as metal oxide) is, specifically, preferably from 0.1 to 10,000 parts by mass based on 100 parts by mass of the core particles.

The alkali may, for example, be potassium hydroxide, sodium hydroxide, ammonia, ammonium carbonate, ammonium hydrogen carbonate, dimethylamine, triethylamine or aniline, and is preferably ammonia in view of its removability by heating.

The amount of the alkali is preferably an amount by which the pH of the raw material liquid becomes from 8.5 to 10.5, more preferably an amount by which the pH of the raw material liquid becomes from 9.0 to 10.0 in view of easiness in formation of a dense shell by three-dimensional polymerization of the metal oxide precursor.

The acid may, for example, be hydrochloric acid or nitric acid. Further, since zinc oxide particles are dissolved in the acid, it is preferred to conduct hydrolysis of the metal oxide precursor by an alkali when the zinc oxide particles are used as the core particles.

The amount of the acid is preferably an amount by which the pH of the raw material liquid becomes from 3.5 to 5.5.

The curing catalyst may, for example, be a metal chelate compound, an organic tin compound, a metal alcholate or a metal fatty acid salt, and in view of the strength of the shell, it is preferably a metal chelate compound or an organic tin compound, particularly preferably a metal chelate compound.

The amount of the curing catalyst (as calculated as metal oxide) is preferably from 0.1 to 20.0 parts by mass, more preferably from 0.2 to 8.0 parts by mass, based on 100 parts by mass of the amount of the metal oxide precursor (as calculated as metal oxide).

Step (b):

The microwave is, usually, an electromagnetic wave having a frequency of from 300 MHz to 300 GHz. Usually, a microwave having a frequency of $2.45\pm0.05$ GHz is used, but the microwave is by no means restricted thereto and a frequency by which an unheated material is efficiently heated may be selected. According to the radio wave regulation law, a frequency band to be used for radio wave applications other than communication, so-called IMS band, is defined, and a microwave of e.g. 433.92 ($\pm0.87$) MHz, 896 ($\pm10$) MHz, 915 ($\pm13$) MHz, 2,375 ($\pm50$) MHz, 2,450 ($\pm50$) MHz, 5,800 ($\pm75$) MHz or 24,125 ($\pm125$) MHz may be used.

The output power of the microwave is preferably an output power by which the raw material liquid is heated to from 100 to 500˚C, more preferably an output power by which the raw material liquid is heated to from 120 to 300˚C. Specifically, the output power is preferably from 100 to 5,000 W, more preferably from 500 to 3,000 W.

When the temperature of the raw material liquid is at least 100˚C, it is possible to form a dense shell in a short period of time. When the temperature of the raw material liquid is at most 500˚C, it is possible to suppress the amount of metal oxide deposited at other than the surface of core particles.

The irradiation time of the microwave may be adjusted to a period of time by which a shell having a desired thickness is formed, depending upon the output power of the microwave (temperature of raw material liquid), and is e.g. from 10 seconds to 60 minutes.

The microwave heat treatment may be a batch process, but, for mass production, a continuous process conducted by using a flow apparatus is more preferred. The irradiation system of the microwave may be a single mode, but a multimode which can conduct heating uniformly is more preferred for mass production.

Step (c):

As the method for removing the dispersion medium from the dispersion of core-shell particles to recover the core-shell particles, the following methods may be mentioned.

(c-1) A method of heating the dispersion of core-shell particles to volatilize e.g. the dispersion medium.
(c-2) A method of subjecting the dispersion of core-shell particles to solid-liquid separation, followed by drying the solid content.
(c-3) A method of spraying the dispersion of core-shell particles into a heated gas by using a spray dryer to volatilize e.g. the dispersion medium (spray drying method).
(c-4) A method of cooling and depressurizing the dispersion of core-shell particles to sublime e.g. the dispersion medium (freeze-drying method).

In the above-mentioned method for producing core-shell particles of the present invention, a liquid containing core particles made of a material having a dielectric constant of at least 10 and a metal oxide precursor, is irradiated with a microwave, whereby it is possible to heat the core particles selectively and to a high temperature. Therefore, even if the temperature of the entire raw material liquid becomes a high temperature, the core particles are heated to a higher temperature, whereby hydrolysis of the metal oxide precursor preferentially proceeds on the surface of the core particles to selectively deposit a metal oxide on the surface of core particles. Accordingly, the amount of metal oxide deposited independently at other than the surface of the core particles can be suppressed. Further, the shell can be formed under a high temperature condition, whereby the shell can be formed in a short period of time.

<Coating composition>

The coating composition of the present invention comprises the core-shell particles of the present invention, a dispersion medium, and as the case requires, a binder.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethylsulfoxide).

The binder may, for example, be an alkoxysilane (such as tetramethoxysilane or TEOS), a silicic acid oligomer obtained by hydrolyzing an alkoxysilane, a silicon compound having a silanol group (such as silicic acid or trimethylsilanol), active silica (such as water glass or sodium orthosilicate), an organic polymer (such as polyethylene glycol, a polyacrylamide derivative or polyvinyl alcohol) or an active energy ray-curable composition (such as an acrylic curable composition).

The mass ratio of the core-shell particles to the binder (core-shell particles/binder) may be appropriately adjusted depending upon the function of the core-shell particles or the application of the coating composition of the present invention. Usually, from 10/0 to 5/5 is preferred, and from 9/1 to 7/3 is more preferred. When the core-shell particles/binder (mass ratio) is within the above range, it is possible to form a coating film which can sufficiently provide functions such as ultraviolet shielding properties, while maintaining hardness of the coating film and suppressing cracking of the coating film.

The solid content concentration of the coating composition of the present invention is preferably from 0.1 to 20 mass%.

The coating composition of the present invention may contain particles other than the core-shell particles of the present invention within a range not to impair the effects of the present invention.

The coating composition of the present invention may contain known additives such as an alkaline earth metal salt such as a chloride, nitrate, sulfate, formate or acetate of e.g. Mg, Ca, Sr or Ba; a curing catalyst such as an inorganic acid, an organic acid, a base, a metal chelate compound, a quaternary ammonium salt or an organic tin compound; inorganic particles showing ultraviolet shielding properties, infrared shielding properties or electroconductive properties; a pigment, a dye and a surfactant.

In the coating composition of the present invention, various compounding agents for coating material comprising an inorganic compound and/or an organic compound may be blended to impart one or more functions selected from hard coating, alkali barrier, coloring electric conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of finger print, lubricity, and the like.

To the coating composition of the present invention, depending upon the function required for the coating film, commonly used additives such as an antifoaming agent, a leveling agent, an ultraviolet absorber, a viscosity modifier, an antioxidant and a fungicide may properly be added. Further, to make the coating film have a desired color, various pigments which are commonly used for coating material such as titania, zirconia, white lead and red oxide may be blended.

<Article>

The article of the present invention is an article having a coating film made of the coating composition of the present invention formed on a substrate.

The thickness of the coating film is preferably from 50 to 300 nm, more preferably from 80 to 200 nm. When the thickness of the coating film is at least 50 nm, interference of light will occur, whereby an antireflection effect will be developed. When the thickness of the coating film is at most 300 nm, a film can be formed without cracking.

The thickness of the coating film is obtained by measuring the interference between the coated surface and the non-coated surface by a profilometer

The coating film is formed by applying the coating composition of the present invention to the surface of a substrate and drying it, and as the case requires, further conducting heating, baking or active energy ray irradiation. When using a glass plate as a substrate, the coating film is more preferably baked in a tempering step of glass from the view point of cost.

The material of the substrate may, for example, be glass, a metal, an organic polymer or silicon, and the substrate may be a substrate having any coating film preliminarily formed thereon. The glass may, for example, be patterned glass formed by e.g. a float process. The organic polymer may, for example, be polyethylene terephthalate (hereinafter referred to as PET), polycarbonate, polymethyl methacrylate or triacetyl acetate.

The shape of the substrate may, for example, be a plate or a film.

On the article of the present invention, another functional layer (such as an adhesion-improving layer or a protecting layer) may be formed in a range not to impair the effects of the present invention. Further, in the present invention, it is preferred that only the coating film of the present invention is formed, in view of productivity and durability.

On the substrate, a coating film comprising an inorganic compound and/or an organic compound may be preliminarily formed to impart one or more functions selected from hard coating, alkali barrier, coloring, electric conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of finger print, lubricity, and the like. Further, on the coating film obtained by applying the coating composition of the present invention, a functional coating film comprising an inorganic compound and/or an organic compound may be formed to impart one or more functions selected from hard coating, alkali barrier, coloring, electric conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of finger print, lubricity, and the like.

As the coating method, a known method such as bar coating, die coating, gravure coating, roll coating, flow coating, spray coating, online spray coating, ultrasonic spray coating, ink jet, or dip coating may be mentioned. The online spray coating is a method of spray coating on the same line for formation of the substrate, and is capable of producing articles at a low cost and is useful, since a step of reheating the substrate can be omitted.

EXAMPLES

Now, the present invention will be described in further detail with reference to Examples and Comparative Examples, but it should be understood that the present invention is by no means restricted thereto.

Example 1 to 5, and 14 are Examples of the present invention, and Examples 6 to 13, and 15 are Comparative Examples.

(AVERAGE PARTICLE SIZE OF CORE PARTICLES AND CORE-SHELL PARTICLES)

The average particle size of the core particles and the core-shell particles was measured by a dynamic light scattering particle size analyzer (MICROTRAC UPA, manufactured by NIKKISO, CO., LTD.).

(DIELECTRIC CONSTANT)

The dielectric constant of the material for core particles was calculated based on values of reflection coefficient and phase which were measured after impressing an electric field to a test sample by a bridge circuit, by using a network analyzer (PNA Microwave Vector Network Analyzer, manufactured by Agilent Technologies), in accordance with JIS-R1627.

(STATE OF LIQUID)

The state of a raw material liquid after heating was confirmed by visual observation.

Dispersion: Core-shell particles are uniformly dispersed in a dispersion medium. Precipitation: A solid content is precipitated without being dispersed in a dispersion medium.

(SHELL THICKNESS)

The core-shell particles were observed by a transmission electron microscope, whereby 100 particles were randomly selected and the shell thicknesses of the respective core-shell particles were measured, whereupon the shell thicknesses of 100 core-shell particles were averaged.

(MAXIMUM PORE VOLUME VALUE)

Specific surface area-pore distribution measuring apparatus (AUTOSORB-1, manufactured by YUASA-IONICS COMPANY, LIMITED.) was used. Vacuum degassing was carried out for 15 hours at 90°C as pretreatment, and then a nitrogen adsorption-desorption isothermal line was measured under a liquid nitrogen temperature (77.35 K). The nitrogen adsorption-desorption isothermal line was analyzed by DFT method (Density Functional Theory) to obtain a pore volume histogram, thereby to obtain the maximum pore volume value. Measurements were carried out at 40 points with even intervals within a relative pressure P/P0 range of from 10e-6 to 0.995, and then pressure crossover and equilibrium time were set to 2 and 3 minutes, respectively. The pores existing in the core-shell particles may be micropores (around 2 nm), mesopores (2 to 50 nm), macropores (50 nm or more) (numerical values in parentheses are values of pore diameters). Therefore, the DFT method as the only analysis method which can be applied to the pore distributions regardless of regional differences was used. Further, since the DFT method produces a pore volume histogram, the maximum pore volume value in the histogram was used as an evaluation index.

(ACID RESISTANCE)

With regard to the core-shell particles having zinc oxide particles as the core particles, the acid resistance of the core particles was evaluated as shown below.

The evaluation results of the acid resistance were used as references for weather resistance (fluorine resistance).

0.1 mol/L of an aqueous nitric acid solution was dropwise added to the dispersion of the core-shell particles to adjust the pH to 4, and then evaluated whether the core particles were dissolved or not from changes in absorbance at an ultraviolet region at the end of a one hour period.

○: The core particles were not dissolved by an acid.
×: The core particles were dissolved by an acid.

(SUPPRESSION OF PHOTOCATALYTIC ACTIVITY)

With regard to the core-shell particles having titanium oxide particles as the core particles, the photocatalytic activity of the core-shell particles was evaluated as shown below.

Methylene blue was dissolved in the dispersion of the core-shell particles, and then black light was irradiated to evaluate existence of a photocatalytic activity from changes in absorbance at a visible region at the end of a six hour period.

○: The photocatalytic activity of the core-shell particles was not shown.
×: The photocatalytic activity of the core-shell particles was shown.

(INFRARED SHIELDING PROPERTIES)

With regard to the core-shell particles having ITO particles as the core particles, the infrared shielding properties were evaluated as shown below. The evaluation results of the infrared shielding properties were used as references for the acid resistance of the core particles.

The dispersion of the core-shell particles was coated on glass to form a coating film, and after baking at 650°C, the acid resistance was evaluated from changes in absorbance at an infrared region.

○: The infrared shielding properties were not decreased.
×: The infrared shielding properties were decreased.

(MOISTURE RESISTANCE)

With regard to the core-shell particles having manganese-doped zinc sulfide particles as the core particles, the moisture resistance was evaluated as shown below.

The dispersion of the core-shell particles was coated on a glass plate to form a coating film, and then baked at 200°C. Thereafter, the obtained sample was left in a thermo-hydrostat bath and maintained at 85°C under 85% for 100 hours, and then the moisture resistance was evaluated from changes in the ultraviolet-excited emission intensity.

○: The emission intensity did not diminish.
×: The emission intensity diminished.

EXAMPLE 1

To a 200 mL pressure-resistant container made of quartz, 25.0 g of an aqueous dispersion (average particle size: 30 nm, solid content concentration: 20 mass%) of zinc oxide (dielectric constant: 18) particles, 10.4 g of TEOS (solid content concentration as calculated as silicon oxide: 28.8 mass%), 63.7 g of ethanol, and 0.9 g of 28 mass% aqueous ammonia were added to prepare a raw material liquid having the pH of 10.

The pressure-resistant container was tightly sealed, and then the raw material liquid was irradiated with a microwave having a maximum output power of 500 W and frequency of 2.45 GHz for 5 minutes by using a microwave heating apparatus (MicroSYNTH, manufactured by Milestone General K.K.) to hydrolyze TEOS and deposit silicon oxide on the surface of zinc oxide particles to form a shell, whereby 100 g of a dispersion (solid content concentration of zinc oxide: 5 mass%, solid content concentration of silicon oxide: 3 mass%) of core-shell particles was obtained. The temperature of the reaction mixture during microwave irradiation was 120˚C. The state of the dispersion of core-shell particles was observed. Further, the average particle size of the core-shell particles in the dispersion medium was measured. The results are shown in Table 1.

By using a rotary evaporator, at 60˚C, the dispersion medium was removed from the dispersion of the core-shell particles to obtain powdery core-shell particles. With regard to the core-shell particles, the shell thickness and the maximum pore volume value of pores having diameters of at most 3 nm were measured. Further, the acid resistance of the core-shell particles was evaluated. The results are shown in Table 1.

Further, the pore volume histogram obtained by nitrogen adsorption of the samples after acid resistance test is shown in Fig. 1. No change to the shell was observed under the acid resistance test of the present example, whereby the pore volume of the core-shell particles was evaluated by the pore volume histogram obtained after acid resistance test. The numerical data of a pore volume histogram of the core-shell particles obtained in Example 1 are shown in Table 4.

EXAMPLE 2

100 g of the dispersion of core-shell particles (solid content concentration of zinc oxide: 5.0 mass%, solid content concentration of silicon oxide: 3.0 mass%) was obtained in the same manner as in Example 1 except that the maximum output power of microwave was changed to 1,000 W and the irradiation time of microwave was changed to 2 minutes. The temperature of the reaction mixture during microwave irradiation was 180˚C. The state of the dispersion of core-shell particles was observed. The results are shown in Table 1.

By using a rotary evaporator, at 60˚C, the dispersion medium was removed from the dispersion of core-shell particles to obtain powdery core-shell particles. With regard to the core-shell particles, the shell thickness and the maximum pore volume value of pores having diameters of at most 3 nm were measured. Further, the acid resistance of the core-shell particles was evaluated. The results are shown in Table 1.

EXAMPLE 3

To a 200 mL pressure-resistant container made by quartz, 34.9 g of an aqueous dispersion (average particle size: 70 nm, solid content concentration: 20 mass%) of zinc oxide (dielectric constant: 18) particles, 10.4 g of TEOS (solid content concentration as calculated as silicon oxide: 28.8 mass%), 53.8 g of ethanol and 0.9 g of 28 mass% aqueous ammonia were added to prepare a raw material liquid having the pH of 10.

The pressure-resistant container was tightly sealed, and then the raw material liquid was irradiated with a microwave having a maximum output power of 500 W and frequency of 2.45 GHz for 10 minutes by using a microwave heating apparatus to hydrolyze TEOS and deposit silicon oxide on the surface of zinc oxide particles to form a shell, whereby 100 g of a dispersion (solid content concentration of zinc oxide: 7 mass%, solid content concentration of silicon oxide: 3 mass%) of core-shell particles was obtained. The temperature of the reaction mixture during microwave irradiation was 100˚C. The state of the dispersion of core-shell particles was observed. Further, the average particle size of the core-shell particles in the dispersion medium was measured. The results are shown in Table 1.

By using a rotary evaporator, at 60˚C, the dispersion medium was removed from the dispersion of the core-shell particles to obtain powdery core-shell particles. With regard to the core-shell particles, the shell thickness and the maximum pore volume value of pores having diameters of at most 3 nm were measured. Further, the acid resistance of the core-shell particles was evaluated. The results are shown in Table 1.

EXAMPLE 4

To a 200 mL pressure-resistant container made by quartz, 50.0 g of an aqueous dispersion (average particle size: 20 nm, solid content concentration: 1 mass%) of titanium oxide (dielectric constant: 30) particles, 1 g of TEOS (solid content concentration as calculated as silicon oxide: 28.8 mass%), 48.1 g of ethanol and 0.9 g of 28 mass% aqueous ammonia were added to prepare a raw material liquid having the pH of 10.

The pressure-resistant container was tightly sealed, and then the raw material liquid was irradiated with a microwave having a maximum output power of 1,000 W and frequency of 2.45 GHz for 5 minutes by using a microwave heating apparatus to hydrolyze TEOS and deposit silicon oxide on the surface of titanium oxide particles to form a shell, whereby 100 g of a dispersion (solid content concentration of titanium oxide: 0.5 mass%, solid content concentration of silicon oxide: 0.3 mass%) of core-shell particles was obtained. The temperature of the reaction mixture during microwave irradiation was 120˚C. The state of the dispersion of core-shell particles was observed. Further, the average particle size of the core-shell particles in the dispersion medium was measured.

The results are shown in Table 1.

By using a rotary evaporator, at 60˚C, the dispersion medium was removed from the dispersion of the core-shell particles to obtain powdery core-shell particles. With regard to the core-shell particles, the shell thickness and the maximum pore volume value of pores having diameters of at most 3 nm were measured. Further, the photocatalytic activity of the core-shell particles was evaluated. The results are shown in Table 1.

EXAMPLE 5

To a 200 mL pressure-resistant container made by quartz, 62.5 g of an aqueous dispersion (average particle size: 60 nm, solid content concentration: 8 mass%) of ITO (the amount of indium was 10 mol% based on tin oxide, dielectric constant: 24) particles, 10.4 g of TEOS (solid content concentration as calculated as silicon oxide: 28.8 mass%), 26.2 g of ethanol and 0.9 g of 28 mass% aqueous ammonia were added to prepare a raw material liquid having the pH of 10.

The pressure-resistant container was tightly sealed, and then the raw material liquid was irradiated with a microwave having a maximum output power of 500 W and frequency of 2.45 GHz for 5 minutes by using a microwave heating apparatus to hydrolyze TEOS and deposit silicon oxide on the surface of ITO particles to form a shell, whereby 100 g of a dispersion (solid content concentration of ITO: 5 mass%, solid content concentration of silicon oxide: 3 mass%) of core-shell particles was obtained. The temperature of the reaction mixture during microwave irradiation was 120˚C. The state of the dispersion of core-shell particles was observed. Further, the average particle size of the core-shell particles in the dispersion medium was measured. The results are shown in Table 1.

By using a rotary evaporator, at 60˚C, the dispersion medium was removed from the dispersion of the core-shell particles to obtain powdery core-shell particles. With regard to the core-shell particles, the shell thickness and the maximum pore volume value of pores having diameters of at most 3 nm were measured. Further, the infrared shielding properties of the core-shell particles were evaluated. The results are shown in Table 1.

EXAMPLE 6

The raw material liquid was prepared in the same manner as in Example 1. The pressure-resistant container was tightly sealed, and then the raw material liquid was heated at 120˚C for 5 minutes by using oil bath. However, the solid content was precipitated without being dispersed in the dispersion medium, whereby the dispersion of core-shell particles was not obtained. The results are shown in Table 2.

EXAMPLE 7

The raw material liquid was prepared in the same manner as in Example 5 except that heating by oil bath was conducted at 180˚C for 2 minutes. However, the solid content was precipitated without being dispersed in the dispersion medium, whereby the dispersion of core-shell particles was not obtained. The results are shown in Table 2.

EXAMPLE 8

The raw material liquid was prepared in the same manner as in Example 4. The pressure-resistant container was tightly sealed, and then the raw material liquid was heated at 120˚C for 5 minutes by using oil bath. However, the solid content was precipitated without being dispersed in the dispersion medium, whereby the dispersion of core-shell particles was not obtained. The results are shown in Table 2.

EXAMPLE 9

The raw material liquid was prepared in the same manner as in Example 5. The pressure-resistant container was tightly sealed, and then the raw material liquid was heated at 120˚C for 5 minutes by using oil bath. However, the solid content was precipitated without being dispersed in the dispersion medium, whereby the dispersion of core-shell particles was not obtained. The results are shown in Table 2.

EXAMPLE 10

To a 200 mL pressure-resistant container made by quartz, 25.0 g of an aqueous dispersion (average particle size: 45 nm, solid content concentration: 20 mass%) of silicon oxide (dielectric constant: 4.6) particles, 10.4 g of TEOS (solid content concentration as calculated as silicon oxide: 28.8 mass%), 63.7 g of ethanol and 0.9 g of 28 mass% aqueous ammonia were added to prepare a raw material liquid having the pH of 10.

The pressure-resistant container was tightly sealed, and then the raw material liquid was irradiated with a microwave having a maximum output power of 1,000 W and frequency of 2.45 GHz for 5 minutes by using a microwave heating apparatus to hydrolyze TEOS and deposit silicon oxide on the surface of silicon oxide particles to form a shell, whereby 100 g of a dispersion (solid content concentration of silicon oxide of core particles: 5 mass%, solid content concentration of a shell: 3 mass%) of core-shell particles was obtained. The temperature of the reaction mixture during microwave irradiation was 120˚C. The state of the dispersion of core-shell particles was observed. Further, the average particle size of the core-shell particles in the dispersion medium was measured. The results are shown in Table 2.

By using a rotary evaporator, at 60˚C, the dispersion medium was removed from the dispersion of core-shell particles to obtain powdery core-shell particles. With regard to the core-shell particles, the shell thickness and the maximum pore volume value of pores having diameters of at most 3 nm were measured. The results are shown in Table 2. The maximum pore volume value of pores having diameters of at most 3 nm was found to be large, whereby a dense shell was not formed.

Further, the pore volume histogram obtained by nitrogen adsorption of the samples after acid resistance test is shown in Fig. 1. The numerical data of the pore volume histogram of the core-shell particles obtained in Example 10 are shown in Table 4. Comparing to Example 1, the maximum pore volume value of pores having diameters of at most 3 nm was found to be large, whereby acid resistance was considered to be low. Further, it was considered that peaks shown in around pore diameters of from 10 to 20 nm were caused by formation of hollow structure, and zinc oxide of core particles was dissolved by an acid.

EXAMPLE 11

The raw material liquid was prepared in the same manner as in Example 1. The pressure-resistant container was tightly sealed, and then the raw material liquid was heated at 60˚C for 60 minutes by using oil bath to hydrolyze TEOS and deposit silicon oxide on the surface of zinc oxide particles to form a shell, whereby 100 g of a dispersion (solid content concentration of zinc oxide: 5 mass%, solid content concentration of silicon oxide: 3 mass%) of core-shell particles was obtained. The state of the dispersion of core-shell particles was observed. Further, the average particle size of the core-shell particles in the dispersion medium was measured. The results are shown in Table 2.

By using a rotary evaporator, at 60˚C, the dispersion medium was removed from the dispersion of core-shell particles to obtain powdery core-shell particles. With regard to the core-shell particles, the shell thickness and the maximum pore volume value of pores having diameters of at most 3 nm were measured. Further, the acid resistance of the core-shell particle was evaluated. The results are shown in Table 2. The maximum pore volume value of pores having diameters of at most 3 nm was found to be large, whereby a dense shell was not formed. Accordingly, the acid resistance was found to be low.

EXAMPLE 12

The raw material liquid was prepared in the same manner as in Example 4. The pressure-resistant container was tightly sealed, and then the raw material liquid was heated at 60˚C for 60 minutes by using oil bath to hydrolyze TEOS and deposit silicon oxide on the surface of titanium oxide particles to form a shell, whereby 100 g of a dispersion (solid content concentration of titanium oxide: 0.5 mass%, solid content concentration of silicon oxide: 0.3 mass%) of core-shell particles was obtained. The state of the dispersion of core-shell particles was observed. Further, the average particle size of the core-shell particles in the dispersion medium was measured. The results are shown in Table 2.

By using a rotary evaporator, at 60˚C, the dispersion medium was removed from the dispersion of core-shell particles to obtain powdery core-shell particles. With regard to the core-shell particles, the shell thickness and the maximum pore volume value of pores having diameters of at most 3 nm were measured. Further, the photocatalytic activity of the core-shell particle was evaluated. The results are shown in Table 2. The maximum pore volume value of pores having diameters of at most 3 nm was found to be large, whereby a dense shell was not formed. Accordingly, the photocatalytic activity was not suppressed.

EXAMPLE 13

The raw material liquid was prepared in the same manner as in Example 5.

The pressure-resistant container was tightly sealed, and then the raw material liquid was heated at 60˚C for 60 minutes by using oil bath to hydrolyze TEOS and deposit silicon oxide on the surface of ITO particles to form a shell, whereby 100 g of a dispersion (solid content concentration of ITO: 5 mass%, solid content concentration of silicon oxide: 3 mass%) of core-shell particles was obtained. The state of the dispersion of core-shell particles was observed. Further, the average particle size of the core-shell particles in the dispersion medium was measured. The results are shown in Table 2.

By using a rotary evaporator, at 60˚C, the dispersion medium was removed from the dispersion of core-shell particles to obtain powdery core-shell particles. With regard to the core-shell particles, the shell thickness and the maximum pore volume value of pores having diameters of at most 3 nm were measured. Further, the infrared shielding properties of the core-shell particle were evaluated. The results are shown in Table 2. The maximum pore volume value of pores having diameters of at most 3 nm was found to be large, whereby a dense shell was not formed. Accordingly, the oxidation resistance was found to be low.

EXAMPLE 14

To a 200 mL pressure-resistant container made by quartz, 50 g of an aqueous dispersion (average agglomerated particle size: 10 nm, solid content concentration: 1.0 mass%) of manganese-doped zinc sulfide (ZnS:Mn, the amount of manganese is 5 mol% based on zinc sulfide, dielectric constant: 13) particles, 4 g of TEOS (solid content concentration as calculated as silicon oxide: 28.8 mass%) (desired shell thickness: 3 nm), 42.4 g of ethanol and 3.6 g of 28 mass% aqueous ammonia were added to prepare a raw material liquid having the pH of 10.

The pressure-resistant container was tightly sealed, and then the raw material liquid was irradiated with a microwave having a maximum output power of 1,000 W and frequency of 2.45 GHz for 5 minutes by using a microwave heating apparatus to hydrolyze TEOS and deposit silicon oxide on the surface of manganese-doped zinc sulfide particles to form a shell, whereby 100 g of a dispersion (solid content concentration of ZnS:Mn: 0.5 mass%, solid content concentration of silicon oxide: 1.2 mass%) of core-shell particles was obtained. The temperature of the reaction mixture during microwave irradiation was 120˚C. The state of the dispersion of core-shell particles was observed. Further, the average particle size of the core-shell particles in the dispersion medium was measured. The results are shown in Table 1.

By using a rotary evaporator, at 60˚C, the dispersion medium was removed from the dispersion of the core-shell particles to obtain powdery core-shell particles. With regard to the core-shell particles, the shell thickness and the maximum pore volume value of pores having diameters of at most 3 nm were measured.

To a 200 mL glass container, 50 g of the dispersion (solid content concentration of ZnS:Mn: 0.5 mass%, solid content concentration of silicon oxide: 1.2 mass%) of the core-shell particles, 10 g of a silicic acid oligomer solution (solid content concentration: 5 mass%) and 40 g of ethanol were added, followed by stirring for 10 minutes to obtain a coating composition (solid content concentration: 1.4 mass%).

The coating composition was applied to the surface of a glass substrate (100 mm × 100 mm, thickness 3.5 mm) wiped with ethanol and spin-coated at a rotational speed of 200 rpm for 60 seconds for uniformalization, baked at 200˚C for 10 minutes to form a coating film having a thickness of 100 nm. With regard to the coating film, moisture resistance evaluation of the particles was conducted by using change in photoluminescence properties as an evaluation index. The results are shown in Table 3.

EXAMPLE 15

The raw material liquid was prepared in the same manner as in Example 14.
The pressure-resistant container was tightly sealed, and then the raw material liquid was heated at 60˚C for 60 minutes by using oil bath to hydrolyze TEOS and deposit silicon oxide on the surface of manganese-doped zinc sulfide particles to form a shell, whereby 100 g of a dispersion (solid content concentration of ZnS:Mn: 0.5 mass%, solid content concentration of silicon oxide: 1.2 mass%) of core-shell particles was obtained. The state of the dispersion of core-shell particles was observed. Further, the average particle size of the core-shell particles in the dispersion medium was measured. The results are shown in Table 3.

Core particles are selectively heated in a case where microwave is used, whereby a dense shell is only formed on the periphery of the core particles. On the other hand, hydrolysis reaction proceeds in the entire liquid in a case where a method of heating by heat sources such as oil bath is used, whereby silica is deposited at other than the periphery of the core particles. Further, in a case where reaction is conducted at a relatively high temperature i.e. 120˚C, hydrolysis reaction proceeds rapidly in the entire liquid, whereby a precipitate or a gel is formed.

EP 2 305 607 A1

TABLE 1

| | | Ex. 1 | Ex. 2 | Ex. 3 | Ex. 4 | Ex. 5 |
|---|---|---|---|---|---|---|
| Core particles | Material | ZnO | ZnO | ZnO | Ti02 | ITO |
| | Average agglomerated particle size (nm) | 30 | 30 | 70 | 20 | 60 |
| | Dielectric constant | 18 | 18 | 18 | 30 | 24 |
| Shell forming condition | Raw material | TEOS | TEOS | TEOS | TEOS | TEOS |
| | Heat source | MW | MW | MW | MW | MW |
| | Raw material liquid temperature (˚C) | 120 | 180 | 100 | 120 | 120 |
| | Time (min.) | 5 | 2 | 10 | 5 | 5 |
| | Frequency (GHz) | 2.45 | 2.45 | 2.45 | 2.45 | 2.45 |
| | Maximum output power (W) | 500 | 1,000 | 500 | 1,000 | 1,000 |
| Evaluation | State of liquid | Dispersion | Dispersion | Dispersion | Dispersion | Dispersion |
| | Shell thickness (nm) | 5 | 5 | 10 | 3 | 15 |
| | Average primary particle size (nm) | 20 | 20 | 60 | 10 | 40 |
| | Average agglomerated particle size (nm) | 60 | 60 | 100 | 50 | 100 |
| | Maximum pore volume value (cc/g) | 0.008 | 0.002 | 0.009 | 0.003 | 0.003 |
| | Acid resistance | ○ | ○ | ○ | - | - |
| | Control of photocatalytic activity | - | - | - | ○ | - |
| | Infrared shielding properties | - | - | - | - | ○ |
| ZnO: Zinc oxide, TiO$_2$: Titanium oxide, MW: Microwave | | | | | | |

14

TABLE 2

| | | Ex.6 | Ex.7 | Ex.8 | Ex.9 | Ex. 10 | Ex. 11 | Ex. 12 | Ex. 13 |
|---|---|---|---|---|---|---|---|---|---|
| Core particles | Material | ZnO | ZnO | $TiO_2$ | ITO | $SiO_2$ | ZnO | $TiO_2$ | ITO |
| | Average agglomerated particle size (nm) | 30 | 30 | 20 | 60 | 45 | 30 | 20 | 60 |
| | Dielectric constant | 18 | 18 | 30 | 24 | 4.6 | 18 | 30 | 24 |
| Shell forming condition | Raw material | TEOS | TEOS | TEOS | TEOS | TEOS | TEOS | TEOS | TEOS |
| | Heat source | OB | OB | OB | OB | MW | OB | OB | OB |
| | Raw material liquid temperature (˚C) | 120 | 180 | 120 | 120 | 120 | 60 | 60 | 60 |
| | Time (min.) | 5 | 2 | 5 | 5 | 5 | 60 | 60 | 60 |
| | Frequency (GHz) | - | - | - | - | 2.45 | - | - | - |
| | Maximum output power (W) | - | - | - | - | 1,000 | - | - | - |
| Evaluation size (nm) | State of liquid | Precipitation | Precipitation | Precipitation | Precipitation | Dispersion | Dispersion | Dispersion | Dispersion |
| | Shell thickness (nm) | - | - | - | - | 6 | 5 | 3 | 15 |
| | Average primary particle size (nm) | 20 | 20 | 10 | 40 | 45 | 20 | 10 | 40 |
| | Average agglomerated particle | - | - | - | - | 60 | 60 | 50 | 100 |
| | Maximum pore volume value (cc/g) | - | - | - | - | 0.082 | 0.095 | 0.083 | 0.098 |
| | Acid resistance | - | - | - | - | - | ✕ | - | - |
| | Control of photocatalytic activity | | | | - | - | - | ✕ | - |
| | Infrared shielding properties | - | - | - | - | - | - | - | ✕ |

ZnO: Zinc oxide, $TiO_2$: Titanium oxide, $SiO_2$: Silicon oxide, MW: Microwave, OB: Oil bath

EP 2 305 607 A1

TABLE 3

|  |  | Ex. 14 | Ex. 15 |
|---|---|---|---|
| Core particles | Material | ZnS:Mn | ZnS:Mn |
|  | Average agglomerated particle size (nm) | 10 | 10 |
|  | Dielectric constant | 13 | 13 |
| Shell forming condition | Raw material | TEOS | TEOS |
|  | Heat source | MW | OB |
|  | Raw material liquid temperature (°C) | 120 | 60 |
|  | Time (min.) | 5 | 60 |
|  | Frequency (GHz) | 2.45 | - |
|  | Maximum output power (W) | 1,000 | - |
| Evaluation | State of liquid | Dispersion | Dispersion |
|  | Average primary particle size (nm) | 5 | 5 |
|  | Shell thickness (nm) | 3 | 3 |
|  | Average agglomerated particle size (nm) | 20 | 20 |
|  | Maximum pore volume value (cc/g) | 0.005 | 0.078 |
|  | Moisture resistance | ○ | × |
| ZnS:Mn (Manganese-doped zinc sulfide) | | | |

TABLE 4

| Pore volume histogram | | |
|---|---|---|
|  | Pore Volume(cc/g) | |
| Pore Width(nm) | EX. 1 | EX. 10 |
| 2.511886 | 0.0084154 | 0.0822921 |
| 3.162278 | 0 | 0.00587864 |
| 3.981072 | 0.00E+00 | 2.25E-03 |
| 5.011872 | 4.298E-05 | 8.29E-03 |
| 6.309573 | 2.71 E-03 | 2.21 E-02 |
| 7.943282 | 7.71 E-03 | 5.78E-02 |
| 9.999999 | 1.48E-03 | 1.21 E-01 |
| 12.589254 | 3.51 E-02 | 2.10E-01 |
| 15.848932 | 4.56E-02 | 1.79E-01 |
| 19.952623 | 6.66E-02 | 4.35E-02 |
| 25.118864 | 5.09E-02 | 3.32E-02 |
| 31.622775 | 1.20E-02 | 1.34E-02 |
| 39.810718 | 2.32E-03 | 8.02E-04 |
| 50.118723 | 1.53E-03 | 5.48E-04 |

INDUSTRIAL APPLICABILITY

The core-shell particles of the present invention are useful for fillers for resin, cosmetics, coatings for glass, etc. The article having the coating film comprising the coating composition of the present invention formed thereon is useful as e.g. a transparent component for vehicles (such as a front transparent substrate, a side transparent substrate or a rear transparent substrate), a building window, a transparent substrate for solar cells, an optical filter, an agricultural film, etc.

The entire disclosure of Japanese Patent Application No. 2008-176868 filed on July 7, 2008 including specification, claims and summary is incorporated herein by reference in its entirety.

**Claims**

1. Core-shell particles comprising core particles made of a material having a dielectric constant of at least 10 and a shell made of a metal oxide and formed on the surface of the core particles, wherein the shell has a thickness of from 1 to 500 nm and has 0.01 cc/g as the maximum pore volume value of pores having diameters of at most 3 nm in a pore volume histogram obtained by nitrogen adsorption; and an average particle size in a dispersion medium is from 1 to 1,000 nm.

2. The core-shell particles according to Claim 1, wherein the material for the core particles is a metal oxide, a metal sulfide or a metal chalcogenide.

3. The core-shell particles according to Claim 2, wherein the material for the core particles is zinc oxide, titanium oxide or cerium oxide.

4. The core-shell particles according to Claim 2, wherein the material for the core particles is indium-doped tin oxide or tin oxide.

5. The core-shell particles according to Claim 2, wherein the material for the core particles is manganese-doped zinc sulfide, cadmium sulfide, zinc selenide or europium-doped yttrium vanadate.

6. The core-shell particles according to any one of Claims 1 to 5, wherein the core-shell particles have an average primary particle size of from 1 to 500 nm.

7. The core-shell particles according to any one of Claims 1 to 6, wherein the material for the shell is silicon oxide.

8. A method for producing the core-shell particles as defined in any one of Claims 1 to 7, which comprises irradiating a liquid containing core particles made of a material having a dielectric constant of at least 10 and a metal oxide precursor with a microwave to form a shell made of a metal oxide on the surface of the core particles.

9. The method for producing core-shell particles according to Claim 8, wherein the microwave has an output power by which the liquid containing core particles made of a material having a dielectric constant of at least 10 and a metal oxide precursor, is heated to a level of from 100 to 500°C.

10. The method for producing core-shell particles according to Claim 8 or 9, wherein the metal oxide precursor is an alkoxysilane.

11. A coating composition comprising the core-shell particles as defined in any one of Claims 1 to 7, and a dispersion medium.

12. An article comprising a substrate and a coating film made of the coating composition as defined in Claim 11 formed on the substrate.

# F i g.1

**INTERNATIONAL SEARCH REPORT**

| International application No. |
| --- |
| PCT/JP2009/060196 |

A.  CLASSIFICATION OF SUBJECT MATTER
C01G1/00(2006.01)i, C01G1/12(2006.01)i

According to International Patent Classification (IPC) or to both national classification and IPC

B.  FIELDS SEARCHED

Minimum documentation searched (classification system followed by classification symbols)
C01G1/00, C01G1/12

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2006-527779 A  (Ciba Specialty Chemicals Holding Inc.),<br>07 December, 2006 (07.12.06),<br>Claims; Par. Nos. [0025], [0036] to [0043]<br>& US 2005/0013934 A1    & EP 1633820 A2 | 1-8,11,12<br>9<br>10 |
| X<br>Y | WO 2008/075784 A1  (Hoya Corp.),<br>26 June, 2008 (26.06.08),<br>Claims; example 1<br>(Family: none) | 1-7<br>9 |
| A | JP 2002-160907 A  (Catalysts & Chemicals Industries Co., Ltd.),<br>04 June, 2002 (04.06.02),<br>Claims; examples<br>(Family: none) | 1-12 |

| ☒ | Further documents are listed in the continuation of Box C. | ☐ | See patent family annex. |
| --- | --- | --- | --- |

\*      Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>02 September, 2009 (02.09.09) | Date of mailing of the international search report<br>15 September, 2009 (15.09.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

19

<table>
<tr><td colspan="2" align="center">**INTERNATIONAL SEARCH REPORT**</td><td>International application No.<br>PCT/JP2009/060196</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-233611 A  (Catalysts & Chemicals Industries Co., Ltd.), 28 August, 2001 (28.08.01), Claims; Par. Nos. [0008], [0009], [0025] (Family: none) | 1-12 |

Form PCT/ISA/210 (continuation of second sheet) (April 2007)

20

**EP 2 305 607 A1**

<table>
<tr><td colspan="2">INTERNATIONAL SEARCH REPORT</td><td>International application No.</td></tr>
<tr><td colspan="2"></td><td>PCT/JP2009/060196</td></tr>
</table>

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    The technical feature of the invention of claim 1 is publicly known as
disclosed in the documents 1 and 2 shown below.
    Consequently, claims 1-12 are divided into the main invention of claims
1-3, 6 and 7 and the invention of the other claims.  As a result, claims
1-12 contain two or more inventions.

Document 1: JP 2006-527779 A (Ciba Specialty Chemicals Holding Inc.)
Document 2: WO 2008/075784 A1 (Hoya Corp.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 305 607 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9847476 A

- JP 2008176868 A